# EUROPÄISCHE PATENTSCHRIFT

(11) **EP 3 075 532 B1**
(45) Veröffentlichungstag und Bekanntmachung des Hinweises auf die Patenterteilung: **23.10.2019**
(21) Anmeldenummer: 15162382.4
(22) Anmeldetag: 02.04.2015
(51) Int. Cl.: B32B 27/08, B32B 27/18, B32B 27/32, B32B 1/08, F16L 9/12, F16L 9/133, F16L 11/00

(54) **ROHR, INSBESONDERE KABELSCHUTZROHR**
PIPE, IN PARTICULAR PROTECTIVE PIPE FOR CABLES
TUYAU, EN PARTICULIER TUYAU DE PROTECTION DE CÂBLES

(43) Veröffentlichungstag der Anmeldung: 05.10.2016
(73) Patentinhaber: Wavin B.V., 8011 CW Zwolle (NL)
(72) Erfinder: Köstring, Volker, 49767 Twist (DE)
(74) Vertreter: Hoffmann Eitle

(56) Entgegenhaltungen:
- WO-A1-01/94112
- DE-A1-102013 016 929
- DATABASE WPI Week 201531 Thomson Scientific, London, GB; AN 2015-243377 XP002744904, & CN 104 356 470 A (KUNSHAN GUJIALA POLYMER TECHNOLOGY CO) 18. Februar 2015 (2015-02-18)
- Agru-Frank GmbH et al: "PAS 1075:2009-04 english translation - Pipes Made From Polyethylene For Alternative Installation Techniques", Internet , 22. Juni 2009 (2009-06-22), XP002744905, Gefunden im Internet: URL:http://www.egeplast.ie/wp-content/uplo ads/2012/06/PAS-1075.pdf [gefunden am 2015-09-22]

## Beschreibung

### Technisches Gebiet

Die Erfindung betrifft ein Rohr mit mindestens zwei Schichten, von denen zumindest eine aus einem polymeren Werkstoff enthaltend zumindest ein thermoplastisches Polyolefin besteht.

### Stand der Technik

Derartige Rohre sind beispielsweise aus der PAS 1075:2009-04 bekannt. Dieser Industriestandard beschreibt Eigenschaften, Anforderungen und Prüfverfahren für Rohre aus Polyethylen für alternative Verlegetechniken, die einen besonders hohen Widerstand gegen äußere Beschädigungen und Punktbelastungen relativ zu gleich geformten Rohren aus einem normalen PE-100 Material aufweisen.

In einer spezifischen Ausgestaltung solcher Rohre enthält das thermoplastische Polyolefin im Werkstoff des Rohres PE 100-RC. Die Abkürzung "RC" steht hierbei für den Ausdruck "resistance to cracks". PE 100-RC-Materialien haben einen um etwa Faktor 10 höheren Widerstand gegen äußere Beschädigungen und Punktbelastungen relativ zu gleich geformten Rohren aus einem normalen PE-100 Material. Zur Definition des Werkstoffes PE 100-RC wird ausdrücklich auf die PAS 1075:2009-04 genommen.

Wenn der polymere Werkstoff des Rohres zusätzlich wenigstens einen Wärmestabilisator enthält, weist das Rohr eine erhöhte Temperaturbeständigkeit auf.

WO-A1-01/94112 offenbart ein Rohr gemäß dem Oberbegriff des Patentanspruchs 1. Ebenfalls zum Stand der Technik gehören CN-A-104 356 470 und DE-A1-10 2013 016929.

### Darstellung der Erfindung

Der Erfindung liegt die Aufgabe zugrunde, ein Rohr aus einem polymeren Werkstoff, enthaltend PE-100 RC und einen Wärmestabilisator, flexibel einsetzbar zu gestalten.

Zu diesem Zweck schafft die vorliegende Erfindung ein Rohr mit den Merkmalen des Patentanspruchs 1. Das Rohr weist mindestens zwei Schichten auf, wobei zumindest eine der Schichten aus einem polymeren Werkstoff enthaltend zumindest ein thermoplastisches Polyolefin besteht. Das thermoplastische Polyolefin enthält einen PE 100-RC-Werkstoff, der die Mindestanforderungen gemäß PAS 1075:2009-04 erfüllt. Der polymere Werkstoff enthält zusätzlich wenigstens einen Wärmestabilisator.

Die eine Schicht, die aus dem besagten polymeren Werkstoff enthaltend zumindest ein thermoplastisches Polyolefin besteht, welches thermoplastische Polyolefin PE 100-RC enthält, wobei der polymere Werkstoff zusätzlich wenigstens einen Wärmestabilisator enthält, kann insbesondere eine Innenschicht des Rohres sein.

Zumindest eine weitere Schicht des Rohres - d.h. insbesondere eine Außenschicht - kann aus einem Werkstoff bestehen, der ebenfalls ein thermoplastisches Polyolefin enthalten kann, aber vorzugsweise von dem besagten polymeren Werkstoff der einen Schicht abweicht und beispielsweise Polyethylen enthält.

Der Werkstoff einer Innenschicht kann auch ein Gleitmittel enthalten, wobei das Gleitmittel insbesondere ein Silikon sein kann. Alternativ oder ergänzend kann das Rohr innenseitig ein Gleitmittel aufweisen.

In einer besonders bevorzugten Ausgestaltung der Erfindung enthält der Werkstoff zumindest einer weiteren Schicht zusätzlich einen Anteil des Werkstoffes der einen Schicht. Wenn beispielsweise die eine Schicht, die den besagten polymeren Werkstoff aus PE 100-RC und dem Wärmestabilisator enthält, die Innenschicht des Rohres ist, kann beispielsweise der Werkstoff der Außenschicht zusätzlich einen Anteil des besagten polymeren Werkstoffs der Innenschicht beinhalten.

Durch diese Ausgestaltungen wird jeweils unabhängig voneinander erreicht, dass die Eigenschaften der inneren Oberfläche des Rohres nicht von den Eigenschaften des Werkstoffes der Außenschicht des Rohres definiert werden, sondern von den Eigenschaften des Materials der Innenschicht des Rohres. Gleichzeitig werden die Eigenschaften der äußeren Oberfläche des Rohres nicht von den Eigenschaften des Werkstoffes der Innenschicht des Rohres definiert, sondern von den Eigenschaften des Materials der Außenschicht des Rohres. Sowohl die Innenschicht als auch die Außenschicht können so gezielt an die Verwendung des Rohres angepasst werden. Während die Außenschicht beispielsweise der Stabilisierung und Verbesserung der Widerstandsfähigkeit des Rohres gegenüber äußeren Einflüssen wie Reibungskräften dient, kann die Innenschicht gezielt an die Verwendung des Rohres für Einsatzfälle angepasst werden, in denen bestimmte Drücke und Temperaturen innerhalb des Rohres vorherrschen.

Durch die Verwendung von Polyethylen und ggf. einem darin enthaltenen Gleitmittel eignet sich die Innenschicht in besonderer Weise als Kabelschutzrohr, in das insbesondere ein Stromkabel, das seinerseits mit einer Kunststoffummantelung versehen ist, einziehbar ist. Während des Einziehens wird das Gleitmittel in dem Polyethylen der Innenschicht in Folge von Reibungskräften freigesetzt, und die Reibung zwischen der Isolierung des Stromkabels und dem Rohr wird hierdurch reduziert.

In einer bevorzugten Ausgestaltung der Erfindung beträgt das Verhältnis der Dicke einer Schicht, insbesondere einer Außenschicht, zur Gesamtdicke des Rohres, jeweils an derselben Position am Umfang des Rohres, 1:100 bis 1:1, insbesondere 1:20 bis 1:5. Durch dieses Verhältnis der Dicke der Außenschicht relativ zur Dicke des Rohres insgesamt und darüber relativ zur Dicke der Innenschicht ist sichergestellt, dass einerseits die Innenschicht dick genug ist, um den von innen auf das Rohr einwirkenden Belastungen Stand zu halten, und gleichzeitig die Eigenschaften der auf den individuellen Verwendungszweck abgestimmten Außenschicht des Rohres ausreichend zur Geltung kommen.

Für verschiedene Einsatzzwecke kann es von Vorteil sein, wenn auch der Werkstoff zumindest einer weiteren Schicht, z.B. einer Außenschicht des Rohres, zumindest einen Wärmestabilisator enthält.

Zumindest einer der vorhandenen Wärmestabilisatoren kann in einem Anteil von insgesamt 0,1 Gew.-% bis 30 Gew.-% im Rohr enthalten sein.

In einer vorteilhaften Ausgestaltung der Erfindung ist/sind der Wärmestabilisator oder die Wärmestabilisatoren ein Antioxidationsmittel. Der Wärmestabilisator oder die Wärmestabilisatoren kann/können dabei ausgewählt sein aus der Gruppe der primären Antioxidantien wie Phenole und Armine, oder aus der Gruppe der sekundären Antioxidantien wie Phosphonite oder Thioester. Besonders bevorzugt ist der Wärmestabilisator oder sind die Wärmestabilisatoren ein Diphosphonit, mehrkerniges Phenol, Phenol, Disulfid, Cinnamolhydrazin, organisches Phosphit, 4,4'-Thiobis(6-tert-butyl-m-cresol) und/oder Butyl-hydroxy-toluol.

In einer bevorzugten Ausgestaltung der Erfindung wird das erfindungsgemäße Rohr als Schutz für erdverlegte Stromkabel eingesetzt, die gekühlt oder ungekühlt langzeitigen Temperaturen von 40 bis 90°C ausgesetzt sind. Das erfindungsgemäße Rohr erfüllt hierzu bevorzugt die Mindestanforderungen nach DIN 16833. Gleichzeitig ermöglicht das erfindungsgemäße Rohr den Einsatz in alternativen Verlegemethoden wie Horizontalspülbohren, Einfräsen oder Einpflügen der Rohrleitungen ohne die zu erwartende Lebensdauer nachhaltig zu beeinflussen. Das erfindungsgemäße Rohr erfüllt hierzu bevorzugt die Mindestanforderungen des Industriestandards PAS 1075:2009-04. Das erfindungsgemäße Rohr kann zudem mit Vorteil als warm- bzw. heißgängige Druckleitung für Prozesswässer oder ähnliches eingesetzt werden.

In dem erfindungsgemäßen Rohr kann eine Außenschicht des Rohres fest mit einer Innenschicht des Rohres verbunden sein.

Ebenso ist es jedoch möglich, dass zwischen einer Außenschicht und einer Innenschicht eine Mittelschicht vorgesehen ist. Während prinzipiell auch die Mittelschicht diejenige Schicht sein kann, die aus dem polymeren Werkstoff aus PE 100-RC und dem Wärmestabilisator besteht, kann die Mittelschicht auch Standard PE-100 Material enthalten, insbesondere ausschließlich aus diesem Material bestehen. Das Rohr ist dann in der Mitte der Rohrwandung spannungsarm, so dass dort keine rissauslösende Stelle ist und damit die Rissbildung insgesamt reduziert werden kann. Zudem ist dadurch die Mitte der Rohrwandung aufgrund fehlenden Sauerstoffs keiner thermooxidativen Alterung ausgesetzt.

Zumindest zwei Schichten des Rohres können durch Verschmelzen oder Verschweißen zu einer sich wie ein einschichtiges Rohr verhaltenden Rohreinheit verbunden sein.

Das Rohr kann innenseitig angeordnete Rippen aufweisen. Es hat sich gezeigt, dass derartige Rippen ein Gleiten eines in das Rohr hineinzuziehenden Kabels deutlich verbessert. Falls Rippen in der Innenschicht vorhanden sind, wird die Dicke der Innenschicht durch den Abstand der Rippenberge zur Außenschicht definiert, also den maximalen Abstand der Innenschicht zur Außenschicht.

Das Rohr kann im Querschnitt im wesentlichen rund sein und einen Außendurchmesser von z.B. mindestens 20 Millimetern, möglicherweise auch mehr als 100 Millimetern aufweisen. Derartige Rohre eignen sich im besonderen Maße zur Verwendung als Kabelschutzrohre, in die strom-, spannungs- oder informationsführende Kabel eingezogen werden.

In einer besonders bevorzugten Ausgestaltung der Erfindung ist der PE 100-RC Werkstoff dergestalt aus der Gruppe möglicher PE 100-RC Werkstoffe ausgewählt und zudem in einem hinreichenden Anteil in dem thermoplastischen Polyolefin der besagten Schicht enthalten, dass auch der Werkstoff der besagten Schicht die Mindestanforderungen gemäß PAS 1075:2009-04 erfüllt. Innerhalb der PE 100-RC Werkstoffe gibt es einige, die den vorgenannten Industriestandard gerade noch erfüllen und andere, die die in diesem Industriestandard angegebenen Mindestanforderungen bei weitem übertreffen. Falls somit ein PE 100-RC Werkstoff ausgewählt wird, der die Mindestanforderungen des Industriestandards bei weitem erfüllt, so kann dieser PE 100-RC Werkstoff in geringerem Anteil in dem Werkstoff der besagten Schicht enthalten sein, als ein PE 100-RC Werkstoff, der die Mindestanforderungen des Industriestandards mit einem weniger großen Abstand erfüllt. Die genaue Auswahl des speziellen PE 100-RC Werkstoffes aus der Gruppe möglicher PE 100-RC Werkstoffe bedingt dabei den erforderlichen Mindestanteil dieses speziellen PE 100-RC Werkstoffes in der fraglichen Schicht, insbesondere Innenschicht, insgesamt.

In einer weiteren besonders bevorzugten Ausgestaltung der Erfindung ist der Wärmestabilisator dergestalt aus der Gruppe möglicher Wärmestabilisatoren ausgewählt und in einem so hinreichenden Anteil in dem Werkstoff der besagten Schicht, insbesondere Innenschicht enthalten, dass der Werkstoff der besagten Schicht auch die Mindestanforderungen gemäß DIN 16833:2009-09 erfüllt. Diese Norm legt Anforderungen bezüglich der Temperaturbeständigkeit von Rohren fest.

Vorzugsweise erfüllt das erfindungsgemäße Rohr und/oder der Werkstoff der Außenschicht des Rohres und/oder der Werkstoff der Innenschicht des Rohres die Mindestanforderungen der PAS 1075:2009-04. Bevorzugt erfüllen die vorgenannten Teile des Rohres oder das Rohr selbst gleichzeitig die Anforderungen der DIN 16833:2009-09. Das Rohr vereint dadurch die Eigenschaften dieser unterschiedlichen Werkstofftypen in sich. Derartig hergestellte Rohre weisen einerseits einen sehr hohen Widerstand gegen langsames Risswachstum auf und sind erheblich widerstandsfähiger gegen äußere mechanische Beschädigungen und Punktbelastungen im Vergleich zu normalen PE 100 Rohren. Die Rohre weisen aber auch eine deutlich erhöhte Langzeitfestigkeit bei Dauertemperaturbelastungen von bis zu 50 Grad Celsius mit Spitzenbelastungen von 70 Grad Celsius auf.

Das erfindungsgemäße Rohr kann vorzugsweise als Kabelschutzrohr zum Schutz von einem oder mehreren, im Rohr unterzubringenden, kunststoffummantelten Stromkabeln ausgestaltet sein. Ein denkbarer Anwendungsfall ist der Schutz von erdverlegten Höchstspannungsleitungen.

### Beschreibung eines Ausführungsbeispiels der Erfindung

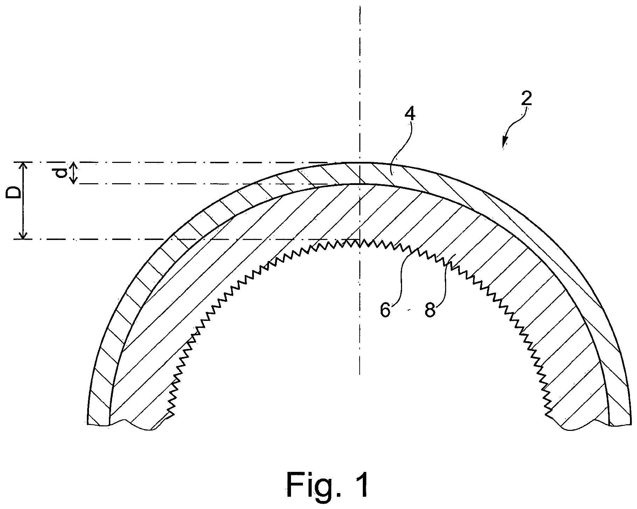

Weitere Einzelheiten der Erfindung sind den Unteransprüchen sowie dem nachfolgend beschriebenen und in Figur 1 schematisch dargestellten Ausführungsbeispiel zu entnehmen.

Die Fig. 1 zeigt eine Querschnittsansicht eines erfindungsgemäßen Rohres 2 mit einer Außenschicht 4 und einer mit der Außenschicht 4 fest verbundenen Innenschicht 8.

Die Innenschicht 8 besteht aus einem polymeren Werkstoff enthaltend zumindest ein thermoplastisches Polyolefin, welches thermoplastische Polyolefin PE 100-RC enthält, wobei der polymere Werkstoff zusätzlich wenigstens einen Wärmestabilisator enthält.

Die Außenschicht 4 besteht hier aus einem Werkstoff, der vom Werkstoff der Innenschicht 8 abweicht.

Dadurch wird erreicht, dass die Eigenschaften der inneren Oberfläche des Rohres 2 nicht von den Eigenschaften des Werkstoffes der Außenschicht 4 des Rohres definiert werden, sondern von den Eigenschaften des Materials der Innenschicht 8 des Rohres 2. Während die Außenschicht 4 der Stabilisierung und Verbesserung der Widerstandsfähigkeit des Rohres 2 gegenüber äußeren Einflüssen wie Reibungskräften dient, kann die Innenschicht 8 gezielt an die Verwendung des Rohres 2 z.B. unter bestimmten Druck- und Temperaturbedingungen angepasst werden.

Im Falle der Verwendung eines im Werkstoff der Innenschicht 8 enthaltenen Gleitmittels eignet sich das Rohr 2 in besonderer Weise als Kabelschutzrohr, in das insbesondere ein Stromkabel, das seinerseits mit einer Kunststoffummantelung versehen ist, einziehbar ist. Während des Einziehens wird das Gleitmittel der Innenschicht in Folge von Reibungskräften ausgenutzt, und die Reibung zwischen der Isolierung des Stromkabels und dem Rohr wird hierdurch reduziert.

Die beiden Schichten 4, 8 des Rohres sind durch Koextrusion zu einer sich wie ein einschichtiges Rohr verhaltenden Rohreinheit verbunden.

Das Rohr ist im Querschnitt im wesentlichen rund und kann einen Außendurchmesser von beispielsweise mindestens 20 Millimetern aufweisen. Derartige Rohre eignen sich im besonderen Maße zur Verwendung als Kabelschutzrohre, in die strom-, spannungs- oder informationsführende Kabel eingezogen werden, die ihrerseits kunststoffummantelt sein können.

Das Rohr 2 weist innenseitig angeordnete Rippen 6 auf. Es hat sich gezeigt, dass derartige Rippen ein Gleiten eines in das Rohr hineinzuziehenden Stromkabels deutlich verbessert.

Das Verhältnis der Dicke d der Außenschicht 4 zur Gesamtdicke D des Rohres 2, jeweils an derselben Position am Umfang des Rohres, beträgt 1:100 bis 1:1, insbesondere 1:20 bis 1:5. Da die Rippen 6 in der Innenschicht 8 vorhanden sind, wird die Gesamtdicke D des Rohres 2 durch den Abstand der Rippenberge zum Außenumfang des Rohres definiert, also den maximalen Abstand der Innenschicht zum Außenumfang.

## Patentansprüche

1. Rohr (2) mit mindestens zwei Schichten, wobei zumindest eine der Schichten aus einem polymeren Werkstoff enthaltend zumindest ein thermoplastisches Polyolefin besteht,
**dadurch gekennzeichnet, dass**
- das thermoplastische Polyolefin einen PE 100-RC-Werkstoff enthält, der die Mindestanforderungen gemäß PAS 1075:2009-04 erfüllt, und
- der polymere Werkstoff zusätzlich wenigstens einen Wärmestabilisator enthält.

2. Rohr (2) nach Anspruch 1, bei welchem die eine Schicht aus dem besagten polymeren Werkstoff eine Innenschicht (8) des Rohres (2) ist.

3. Rohr (2) nach einem der vorhergehenden Ansprüche, bei welchem zumindest eine weitere Schicht des Rohres (2) aus einem Werkstoff besteht, der ebenfalls ein thermoplastisches Polyolefin enthalten kann, aber vorzugsweise von dem besagten polymeren Werkstoff der einen Schicht abweicht und beispielsweise Polyethylen enthält.

4. Rohr (2) nach einem der vorhergehenden Ansprüche, bei welchem das Rohr (2) innenseitig ein Gleitmittel aufweist und/oder der Werkstoff einer Innenschicht (8) des Rohres (2) ein Gleitmittel enthält.

5. Rohr (2) nach einem der vorhergehenden Ansprüche, bei welchem der Werkstoff zumindest einer weiteren Schicht zusätzlich einen Anteil des besagten polymeren Werkstoffes der einen Schicht enthält.

6. Rohr (2) nach einem der vorhergehenden Ansprüche, bei welchem das Verhältnis der Dicke d einer Schicht, insbesondere einer Außenschicht (4) des Rohres (2) zur Gesamtdicke D des Rohres (2), an derselben Position am Umfang des Rohres (2) 1:100 bis 1:1, insbesondere 1:20 bis 1:5 beträgt.

7. Rohr (2) nach einem der vorhergehenden Ansprüche, bei welchem auch der Werkstoff einer weiteren Schicht des Rohres (2) zumindest einen Wärmestabilisator enthält.

8. Rohr (2) nach einem der vorhergehenden Ansprüche, bei welchem zumindest einer der vorhandenen Wärmestabilisatoren in einem Anteil von insgesamt 0,1 Gew.-% bis 30 Gew.-% im Rohr (2) enthalten ist.

9. Rohr (2) nach einem der vorhergehenden Ansprüche, bei welchem zumindest einer der vorhandenen Wärmestabilisatoren ein Antioxidationsmittel ist, insbesondere Diphosphonit, mehrkerniges Phenol, Phenol, Disulfid, Cinnamolhydrazin, organisches Phosphit, 4,4'-Thiobis(6-tert-butyl-m-cresol) und/oder Butyl-hydroxy-toluol.

10. Rohr nach einem der vorhergehenden Ansprüche, bei welchem eine Außenschicht (4) des Rohres (2) fest mit einer Innenschicht (8) des Rohres (2) verbunden ist.

11. Rohr (2) nach einem der Ansprüche 1 bis 9, bei welchem zwischen einer Außenschicht und einer Innenschicht des Rohres (2) eine Mittelschicht aus einem Werkstoff vorgesehen ist, der vorzugsweise Standard-PE-100-Material enthält.

12. Rohr (2) nach einem der vorhergehenden Ansprüche, bei welchem zumindest zwei Schichten des Rohres durch Koextrusion zu einer sich wie ein einschichtiges Rohr verhaltenden Rohreinheit verbunden sind.

13. Rohr (2) nach einem der vorhergehenden Ansprüche, bei welchem das Rohr innenseitig angeordnete Rippen (6) aufweist.

14. Rohr (2) nach einem der vorhergehende Ansprüche, bei welchem der Werkstoff der besagten Schicht des Rohres und/oder das Rohr (2) insgesamt die Mindestanforderungen gemäß PAS 1075:2009-04 und/oder DIN 16833:2009-09 erfüllt, insbesondere indem
- das thermoplastische Polyolefin im Werkstoff der besagten Schicht in einem ausreichenden Anteil enthalten ist, dass der Werkstoff der besagten Schicht die Mindestanforderungen gemäß PAS 1075:2009-04 erfüllt, oder
- das PE-100-RC im Werkstoff der besagten Schicht dergestalt aus der Gruppe möglicher PE-100-RC ausgewählt und in einem hinreichenden Anteil in dem thermoplastischen Polyolefin des Werkstoffes der besagten Schicht enthalten ist, dass der Werkstoff der besagten Schicht die Mindestanforderungen gemäß PAS 1075:2009-04 erfüllt, und/oder
- der Wärmestabilisator dergestalt aus der Gruppe möglicher Wärmestabilisatoren ausgewählt und in einem hinreichenden Anteil in dem Rohr enthalten ist, dass das Rohr die Mindestanforderungen gemäß DIN 16833:2009-09 erfüllt.

15. Rohr (2) nach einem der vorhergehenden Ansprüche, welches Rohr (2) als Kabelschutzrohr zum Schutz von einem oder mehreren, im Rohr (2) unterzubringenden strom-, spannungs- oder informationsführenden Kabeln ausgestaltet ist.

## Claims

1. Pipe (2) comprising at least two layers, wherein at least one of the layers consists of a polymeric material containing at least one thermoplastic polyolefin,
**characterised in that**
- the thermoplastic polyolefin contains a PE 100-RC material which fulfils the minimum requirements according to PAS 1075:2009-04, and
- the polymeric material contains in addition at least one heat stabiliser.

2. Pipe (2) according to claim 1, wherein the one layer consisting of said polymeric material is an inner layer (8) of the pipe (2).

3. Pipe (2) according to one of the preceding claims, wherein at least one further layer of the pipe (2) consists of a material which can also contain a thermoplastic polyolefin, but preferably differs from said polymeric material of the one layer and for example contains polyethylene.

4. Pipe (2) according to one of the preceding claims, wherein the pipe (2) has on its inner side a lubricant and/or the material of an inner layer (8) of the pipe (2) contains a lubricant.

5. Pipe (2) according to one of the preceding claims, wherein the material of at least one further layer contains in addition a component of said polymeric material of the one layer.

6. Pipe (2) according to one of the preceding claims, wherein the ratio of the thickness d of a layer, in particular an outer layer (4) of the pipe (2), to the total thickness D of the pipe (2) at the same position on the circumference of the pipe (2) is 1:100 to 1:1, in particular 1:20 to 1:5.

7. Pipe (2) according to one of the preceding claims, wherein the material of a further layer of the pipe (2) also contains at least one heat stabiliser.

8. Pipe (2) according to one of the preceding claims, wherein at least one of the heat stabilisers present is contained in the pipe (2) in a proportion amounting in total to 0.1 % by weight to 30 % by weight.

9. Pipe (2) according to one of the preceding claims, wherein at least one of the heat stabilisers present is an antioxidant, in particular diphosphonite, polynuclear phenol, phenol, disulphide, cinnamol hydrazine, organic phosphite, 4,4'-thiobis(6-tert-butyl-m-cresol) and/or butyl-hydroxy-toluene.

10. Pipe according to one of the preceding claims, wherein an outer layer (4) of the pipe (2) is firmly bonded with an inner layer (8) of the pipe (2).

11. Pipe (2) according to one of the claims 1 to 9, wherein a middle layer is provided between an outer layer and an inner layer of the pipe (2) which consists of a material which preferably contains standard PE 100 material.

12. Pipe (2) according to one of the preceding claims, wherein at least two layers of the pipe are combined through coextrusion to form a pipe unit which behaves like a single-layer pipe.

13. Pipe (2) according to one of the preceding claims, wherein the pipe has ribs(6) arranged on the inner side.

14. Pipe (2) according to one of the preceding claims, wherein the material of said layer of the pipe and/or the pipe (2) as a whole fulfils the minimum requirements according to PAS 1075:2009-04 and/or DIN 16833:2009-09, in particular in that
- the thermoplastic polyolefin is contained in the material of said layer in a sufficient proportion that the material of said layer fulfils the minimum requirements according to PAS 1075:2009-04, or
- the PE 100-RC in the material of said layer is selected in such a way from the group of possible PE 100-RC and contained in a sufficient proportion in the thermoplastic polyolefin of the material of said layer that the material of said layer fulfils the minimum requirements according to PAS 1075:2009-04, and/or
- the heat stabiliser is selected from the group of possible heat stabilisers and contained in the pipe in a sufficient proportion that the pipe fulfils the minimum requirements according to DIN 16833:2009-09.

15. Pipe (2) according to one of the preceding claims, said pipe (2) being configured as a cable protection pipe for the protection of one or more cables carrying current, voltage or information which are to be housed in the pipe (2).

## Revendications

1. Tuyau (2) avec au moins deux couches, dans lequel au moins une des couches se compose d'un matériau polymère contenant au moins une polyoléfine thermoplastique,
**caractérisé en ce que**
- la polyoléfine thermoplastique contient un matériau PE 100-RC qui remplit les exigences minimales selon PAS 1075:2009-04, et
- le matériau polymère contient en plus au moins un stabilisateur thermique.

2. Tuyau (2) selon la revendication 1, pour lequel l'une couche en ledit matériau polymère est une couche intérieure (8) du tuyau (2).

3. Tuyau (2) selon l'une quelconque des revendications précédentes, pour lequel au moins une autre couche du tuyau (2) se compose d'un matériau qui peut aussi contenir une polyoléfine thermoplastique mais diverge de préférence dudit matériau polymère de l'une couche et contient par exemple du polyéthylène.

4. Tuyau (2) selon l'une quelconque des revendications précédentes, pour lequel le tuyau (2) présente côté intérieur un lubrifiant et/ou le matériau d'une couche intérieure (8) du tuyau (2) contient un lubrifiant.

5. Tuyau (2) selon l'une quelconque des revendications précédentes, pour lequel le matériau d'au moins une autre couche contient en plus une part dudit matériau polymère de l'une couche.

6. Tuyau (2) selon l'une quelconque des revendications précédentes, pour lequel le rapport entre l'épaisseur d d'une couche, en particulier d'une couche extérieure (4) du tuyau (2) et l'épaisseur entière D du tuyau (2), au niveau de la même position sur la périphérie du tuyau (2) est de 1:100 à 1:1, en particulier de 1:20 à 1:5.

7. Tuyau (2) selon l'une quelconque des revendications précédentes, pour lequel le matériau d'une autre couche du tuyau (2) contient aussi au moins un stabilisateur thermique.

8. Tuyau (2) selon l'une quelconque des revendications précédentes, pour lequel au moins un des stabilisateurs thermiques présents est contenu dans une part dans l'ensemble de 0,1 % en poids à 30 % en poids dans le tuyau (2).

9. Tuyau (2) selon l'une quelconque des revendications précédentes, pour lequel au moins un des stabilisateurs thermiques présents est un antioxydant, en particulier diphosphonite, phénol polynucléaire, phénol, disulfure, hydrazine de cinnamol, phosphite organique, 4,4'-thiobis(6-tert-butyle-m-crésol) et/ou butyle-hydroxy-toluène.

10. Tuyau selon l'une quelconque des revendications précédentes, pour lequel une couche extérieure (4) du tuyau (2) est fixement raccordée à une couche intérieure (8) du tuyau (2).

11. Tuyau (2) selon l'une quelconque des revendications 1 à 9, pour lequel entre une couche extérieure et une couche intérieure du tuyau (2) une couche médiane en un matériau est prévue, laquelle contient de préférence du matériau standard PE-100.

12. Tuyau (2) selon l'une quelconque des revendications précédentes, pour lequel au moins deux couches du tuyau sont raccordées par coextrusion en une unité de tuyau se comportant comme un tuyau à une couche.

13. Tuyau (2) selon l'une quelconque des revendications précédentes, pour lequel le tuyau présente des nervures (6) agencées côté intérieur.

14. Tuyau (2) selon l'une quelconque des revendications précédentes, pour lequel le matériau de ladite couche du tuyau et/ou le tuyau (2) remplit dans l'ensemble les exigences minimales selon PAS 1075:2009-04 et/ou DIN 16833:2009-09, en particulier en ce que
- la polyoléfine thermoplastique est contenue dans le matériau de ladite couche dans une part suffisante, que le matériau de ladite couche remplit les exigences minimales selon PAS 1075:2009-04, ou
- le PE-100-RC dans le matériau de ladite couche est sélectionné à partir du groupe de PE-100-RC possible et est contenu dans une part suffisante dans la polyoléfine thermoplastique du matériau de ladite couche de telle manière que le matériau de ladite couche remplisse les exigences minimales selon PAS 1075:2009-04, et/ou
- le stabilisateur thermique est sélectionné à partir du groupe de stabilisateurs thermiques possibles et est contenu dans une part suffisante dans le tuyau de telle manière que le tuyau remplisse les exigences minimales selon DIN 16833:2009-09.

15. Tuyau (2) selon l'une quelconque des revendications précédentes, lequel tuyau (2) est configuré comme tuyau de protection de câble pour la protection des un ou plusieurs câbles à loger dans le tuyau (2), acheminant du courant, de la tension ou des informations.
